# FASCICULE DE BREVET EUROPEEN

(11) **EP 1 141 581 B1**
(45) Date de publication et mention de la délivrance du brevet: **05.03.2003**
(21) Numéro de dépôt: 99958339.6
(22) Date de dépôt: 15.12.1999
(51) Int. Cl.: F16H 3/091

(54) **BOITE DE VITESSES COMPACTE A DEUX ARBRES SECONDAIRES**
GETRIEBE KOMPAKTER BAUART MIT ZWEI VORGELEGEWELLEN
COMPACT GEARBOX WITH TWO OUTPUT SHAFTS

(30) Priorité: 15.12.1998 FR 9815801
(43) Date de publication de la demande: 10.10.2001
(73) Titulaire: Renault s.a.s., 92100 Boulogne Billancourt (FR)
(72) Inventeur: BRUT, Gérard, F-78800 Houilles (FR); PIERSON, Bernard, F-91430 Igny (FR)
(86) Numéro de dépôt international: FR9903156
(87) Numéro de publication internationale: WO00036318

(56) Documents cités:
- EP-A- 0 224 407
- EP-A- 0 239 553
- EP-A- 0 540 989
- EP-A- 0 733 825

## Description

L'invention concerne une boîte de vitesses de véhicule automobile selon le préambule de la revendication 1 connue du EP-A-540 989.

L'invention concerne plus particulièrement une boîte de vitesses de véhicule automobile, à arbres parallèles, du type qui comporte un arbre primaire lié en rotation au moteur du véhicule par l'intermédiaire d'un embrayage avant, et deux arbres secondaires liés chacun en rotation à une couronne d'un différentiel pour entraîner les roues du véhicule, du type dans lequel des pignons fixes portés par l'arbre primaire engrènent avec des pignons fous portés par les arbres secondaires, les pignons fous des arbres secondaires étant susceptibles d'être sélectivement liés en rotation aux arbres qui les portent par des moyens de crabotage pour établir sélectivement différents rapports de démultiplication et transmettre un couple du moteur aux roues du véhicule.

On connaît de nombreux exemples de boîtes de vitesses de ce type.

Il s'agit généralement de boîtes de vitesses à commande manuelle, dont l'arbre primaire est lié en rotation au moteur du véhicule par l'intermédiaire d'un embrayage, et dont les arbres secondaires engrènent avec la couronne du différentiel qui transmet le couple du moteur aux roues du véhicule.

Ces boîtes présentent l'avantage d'être très compactes, puisque les pignons des arbres secondaires sont répartis sur les deux arbres secondaires, ce qui permet de réduire considérablement la longueur occupée par les pignons des engrenages correspondants sur l'arbre primaire.

Cette disposition est particulièrement appropriée à une architecture de groupe motopropulseur dans laquelle l'ensemble formé du moteur et de la boîte de vitesses est implanté transversalement par rapport au véhicule.

Le document US-A-5.715.727 décrit un exemple d'une telle boîte de vitesses.

Ce document décrit plus particulièrement une boîte de vitesses à un arbre primaire et deux arbres secondaires dont les axes sont agencés transversalement sensiblement suivant un V, l'axe de l'arbre primaire étant agencé au sommet du V, et les axes des arbres secondaires étant agencés aux extrémités de branches du V.

Cet agencement présente une longueur inférieure à celle d'une boîte conventionnelle à deux arbres parallèles.

En effet, dans cette boîte, l'arbre primaire et les arbres secondaires portent des pignons qui permettent d'établir différents rapports de démultiplication. Cette disposition permet avantageusement, par rapport à une boîte conventionnelle, de répartir les engrenages associés aux rapports de démultiplication sur une longueur moindre.

Toutefois, on constate d'une part que l'arbre primaire porte un pignon fou et son dispositif de synchronisation associé et, d'autre part, qu'un rapport de marche arrière est obtenu par l'adjonction d'un quatrième arbre, qui est parallèle à l'arbre primaire et aux arbres secondaires, qui engrène avec un des pignons fous de l'un des arbres secondaires, et qui engrène sur la couronne du différentiel pour transmettre un mouvement de rotation inversé.

Ces deux dispositions sont particulièrement encombrantes transversalement.

Par ailleurs, tous les engrenages de cette boîte sont situés conventionnellement dans des plans transversaux parallèles les uns aux autres, la longueur de la boîte étant imposée par le nombre d'engrenages qu'elle comporte et par l'épaisseur des pignons qui y sont associés. Cette disposition est particulièrement encombrante longitudinalement.

Pour remédier à ces inconvénients, l'invention propose une boîte de vitesses compacte longitudinalement, dont la longueur n'est pas tributaire du nombre d'engrenages.

Dans le but de réaliser un gain substantiel sur la longueur de la boîte, l'invention propose une boîte du type comprenant les caractéristiques de la revendication 1.

Selon d'autres caractéristiques de l'invention :
- l'arbre primaire comporte cinq pignons fixes qui engrènent respectivement avec quatre pignons fous d'un premier arbre secondaire et deux pignons fous d'un second arbre secondaire, pour définir six rapports de transmission de marche avant ;
- l'arbre primaire comporte, d'avant en arrière un premier, un troisième, un quatrième et un cinquième pignons fixes qui engrènent respectivement avec un premier, un deuxième, un troisième et un quatrième pignons fous du premier arbre secondaire pour définir respectivement les sixième, cinquième, second et premier rapports de transmission de marche avant lorsque les pignons fous du premier arbre secondaire sont crabotés sur leur arbre ;
- l'arbre primaire comporte un deuxième et le troisième pignon fixe qui engrènent respectivement avec un premier et un deuxième pignon fou du second arbre secondaire pour définir respectivement les troisième et quatrième rapports de transmission de marche avant lorsque les pignons fous du second arbre secondaire sont crabotés sur leur arbre ;
- le second arbre secondaire comportant ledit pignon fou de marche arrière qui engrène avec un deuxième jeu de dentures du troisième pignon fou du premier arbre secondaire pour définir le rapport de marche arrière, lorsque le troisième pignon fou du second arbre secondaire est craboté sur son arbre et que le troisième pignon fou du premier arbre secondaire n'est pas craboté sur son arbre ;
- les moyens de crabotage du premier arbre secondaire comportent un premier crabot double permettant de craboter sélectivement le premier ou bien le deuxième pignon fou sur le premier arbre secondaire, et un deuxième crabot double permettant de craboter sélectivement le troisième pignon fou ou bien le quatrième pignon fou sur le premier arbre secondaire ;
- les moyens de crabotage du second arbre secondaire comportent un troisième crabot double permettant de craboter sélectivement le premier ou bien le deuxième pignon fou sur le second arbre secondaire, et un quatrième crabot simple permettant de craboter le troisième pignon fou de marche arrière sur le second arbre secondaire ;
- seules les extrémités des arbres primaire et secondaires sont montées à rotation dans des paliers d'un carter de la boîte ;
- le quatrième crabot simple du troisième pignon fou de marche arrière du second arbre secondaire est situé à proximité du palier d'extrémité arrière du second arbre secondaire ;
- le second arbre secondaire est un arbre compact qui est monté à rotation sur les seuls paliers d'extrémité avant et d'extrémité arrière ;
- les axes de rotation des arbres primaire et secondaire sont agencés transversalement suivant un V, l'arbre primaire étant agencé au sommet du V et les arbres secondaires étant agencé aux extrémités des branches du V.

D'autres caractéristiques et avantages de l'invention apparaîtront à la lecture de la description détaillée qui suit pour la compréhension de laquelle on se reportera aux dessins annexés dans lesquels :
- la figure 1 est une vue en coupe à plans rabattus selon la ligne 1-1 de la figure 2 d'une boîte de vitesses selon l'invention et
- la figure 2 est une vue schématique en coupe, dans le plan 2-2 de la figure 1, de l'agencement des arbres d'une boîte de vitesses selon la figure 1.

Dans la description qui va suivre, des chiffres de référence identiques désignent des pièces identiques ou ayant des fonctions similaires.

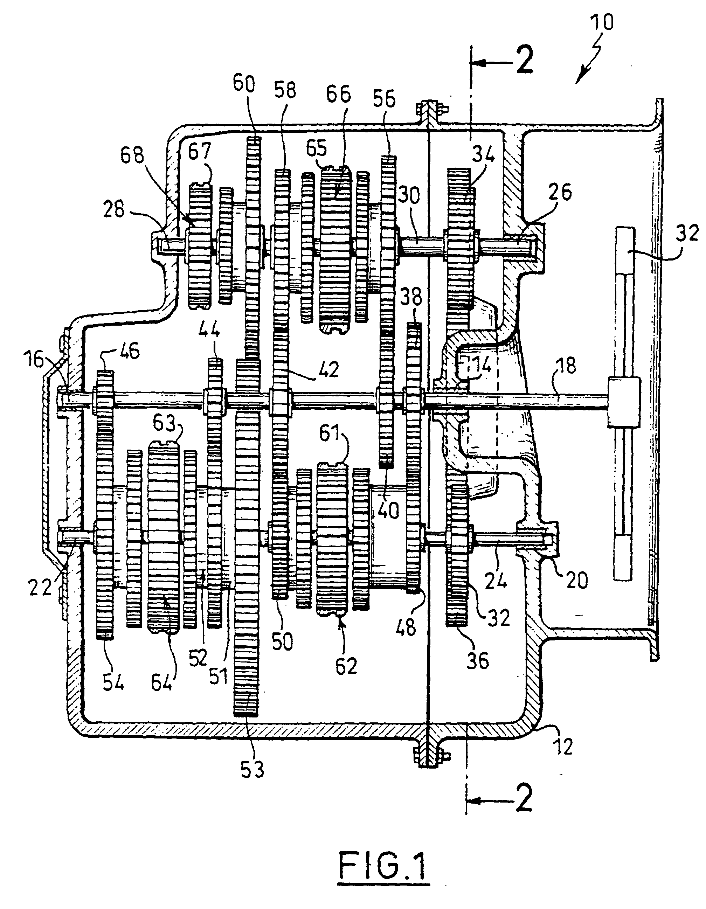

On a représenté sur la figure 1 l'ensemble d'une boîte de vitesses 10 réalisée conformément à l'invention.

De manière connue la boîte de vitesses 10 comporte un carter 12, qui reçoit en rotation dans des paliers d'extrémité 14 avant et 16 arrière les extrémités d'un arbre primaire 18, qui reçoit en rotation dans des paliers d'extrémité 20 avant et 22 arrière les extrémités d'un premier arbre secondaire 24, et qui reçoit en rotation dans des paliers d'extrémité 26 avant et 28 arrière les extrémités d'un second arbre secondaire 30.

Cette disposition est particulièrement avantageuse car ainsi les arbres primaire 18 et secondaires 24, 30 ne nécessitent pas la réalisation d'une cloison transversale intermédiaire destinée à supporter, par exemple des paliers de support en rotation supplémentaires des arbres primaire 18 et secondaires 24, 30. Une telle boîte 10 est donc particulièrement compacte longitudinalement et son carter 12 est plus facile à réaliser en moulage. On remarquera que cette disposition est rendue possible par le fait que la boîte 10 est une boîte à deux arbres secondaires courts 24 et 30 qui ne sont pas sujets à d'éventuels problèmes de flexion.

L'arbre primaire 18 est lié en rotation à un moteur thermique du véhicule (non représenté) associé à la boîte de vitesses 10 par l'intermédiaire d'un embrayage avant 32 et il est susceptible d'entraîner en rotation un des deux arbres secondaires 24 ou 30, par l'intermédiaire d'engrenages et de moyens de crabotage qui seront décrits ultérieurement, pour qu'un pignon avant de sortie 32 du premier arbre secondaire 24 ou un pignon avant de sortie 34 du second arbre secondaire 30 entraîne une couronne 36 d'un différentiel (non représenté) lié aux roues (non représentées) du véhicule.

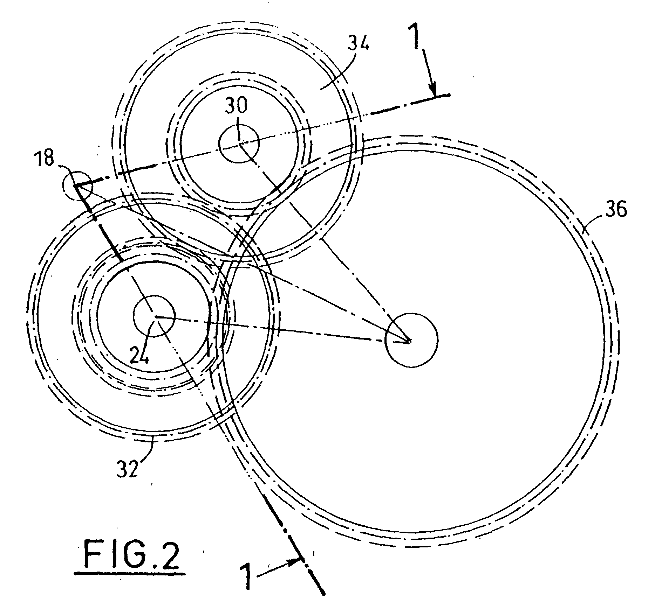

Ainsi, comme on peut le voir à la figure 2, les axes de rotation des arbres parallèles primaire 18 et secondaire 24, 30 sont agencés transversalement suivant un V, l'arbre primaire 18 étant agencé au sommet du V et les arbres secondaires 24, 30 étant agencés aux extrémités des branches du V. La figure 2 illustre plus précisément l'engrènement du pignon de sortie 32 du premier arbre secondaire 24 et du pignon de sortie 34 du second arbre secondaire 30 avec la couronne 36 du différentiel de la boîte de vitesses 10.

L'arbre primaire 18 comporte conventionnellement d'avant en arrière cinq pignons fixes 38, 40, 42 44, et 46 qui engrènent avec des pignons fous des arbres secondaires pour obtenir, lorsque ces derniers sont crabotés sur leurs arbres, différents rapports de transmission de marche avant.

Ainsi, le premier arbre secondaire 24 porte d'avant en arrière un premier pignon fou 48 qui engrène avec le premier pignon fixe 38 de l'arbre primaire 18 pour définir un sixième rapport de marche avant, un deuxième pignon fou 50 qui engrène avec le troisième pignon fixe 42 de l'arbre primaire 18 pour définir un cinquième rapport de marche avant, un troisième pignon fou 52 qui engrène avec le quatrième pignon fixe 44 de l'arbre primaire 18 pour définir un second rapport de marche avant, et un quatrième pignon fou 54 qui engrène avec le cinquième pignon fixe 46 de l'arbre primaire 18 pour définir un premier rapport de marche avant.

D'une façon analogue, le second arbre secondaire 30 porte d'avant en arrière un premier pignon fou 56 qui engrène avec le deuxième pignon fixe 40 de l'arbre primaire 18 pour définir un troisième rapport de marche avant, et un deuxième pignon fou 58 qui, conformément à l'invention, engrène lui aussi avec le troisième pignon fixe 42 de l'arbre primaire 18 pour définir un quatrième rapport de marche avant.

Cette disposition est particulièrement avantageuse car le pignon fixe 42 de l'arbre primaire 18, en engrenant simultanément et en permanence avec le pignon fou 50 du premier arbre secondaire 24 et le pignon fou 58 du second arbre secondaire 30, permet de définir les deux rapports de transmission de marche avant différents que sont les cinquième et quatrième rapports de marche avant, lorsque l'un ou l'autre des pignons fous 50 et 58 est craboté sur son arbre.

Dans le mode de réalisation préféré de l'invention, on a limité cet agencement particulièrement compact dans la dimension longitudinale à un seul pignon fixe de l'arbre primaire 18. Cette disposition n'est par restrictive de l'invention, et il serait notamment possible, moyennant des dentures de pignons convenables, d'étendre cet agencement à tous les pignons fixes portés par l'arbre primaire 18.

Par ailleurs, le second arbre secondaire 30 comporte en arrière du deuxième pignon fou 58, un troisième pignon fou 60, qui engrène en permanence avec le troisième pignon fou 52 du premier arbre secondaire pour définir plus spécifiquement, lorsque le troisième pignon fou 60 du second arbre secondaire 30 est craboté sur son arbre et que le troisième pignon fou 52 du premier arbre secondaire n'est pas craboté sur son arbre, un rapport de transmission de marche arrière.

En effet, le troisième pignon fou 52 du premier arbre secondaire 24 comporte deux jeux de dentures.

Un premier jeu de denture 51 engrène en permanence, comme précédemment décrit, avec le quatrième pignon fixe 44 de l'arbre primaire 18, et un deuxième jeu de denture 53 engrène en permanence avec le troisième pignon fou 60 du second arbre secondaire 30.

Ainsi, lorsque le troisième pignon fou 60 du second arbre secondaire 30 est craboté sur son arbre et que le troisième pignon fou 52 du premier arbre secondaire 24 n'est pas craboté sur son arbre, le couple moteur issu du moteur du véhicule chemine par le quatrième pignon fixe 44 de l'arbre primaire 18, les premier et deuxième jeux de dentures 51 et 53 du troisième pignon fou 52 du premier arbre secondaire 24, et par le troisième pignon fou 60 du second arbre secondaire 30, le second arbre secondaire 30 tournant dans le même sens que l'arbre primaire 18, ce qui détermine un rapport de transmission de marche arrière du véhicule.

L'engagement des rapports de transmission est obtenu conventionnellement par le crabotage sélectif des pignons fous des premier et second arbres secondaires 24 et 30.

A cet effet, chacun des arbres secondaires 24 et 30 comportent des moyens de crabotage.

Ainsi, les moyens de crabotage du premier arbre secondaire 24 comportent un premier crabot double 62 permettant de craboter sélectivement le premier pignon fou 48 ou bien le deuxième pignon fou 50 sur le premier arbre secondaire 24, et un deuxième crabot double 64 permettant de craboter sélectivement le troisième pignon fou 52 ou bien le quatrième pignon fou 54 sur le premier arbre secondaire 24.

De même, les moyens de crabotage du second arbre secondaire 30 comportent un troisième crabot double 66 permettant de craboter sélectivement le premier pignon fou 56 ou bien le deuxième pignon fou 58 sur le second arbre secondaire 30, et un quatrième crabot 68 simple permettant de craboter le troisième pignon fou 60 de marche arrière sur le second arbre secondaire 30.

Cette disposition est particulièrement avantageuse car l'utilisation des crabots doubles 62, 64, et 66 permet un gain d'encombrement longitudinal notable par rapport à une boite conventionnelle.

Chaque crabot 62, 64, 66, ou 68 est constitué d'une bague 61, 63, 65,ou 67 associée qui est solidaire en rotation de l'arbre secondaire 24 ou 30 qui la porte et qui est susceptible de coulisser axialement vers l'avant ou vers l'arrière pour craboter ou respectivement décraboter le pignon fou concerné.

Le détail de la réalisation de chaque crabot étant connu de l'état de la technique, il ne sera pas plus explicité dans la présente description.

L'engagement des rapports de transmission est donc obtenu en déplaçant les bagues 61, 63, 65, ou 67 de chacun des crabots 62, 64, 66, ou 68.

Ainsi, le passage du premier rapport de marche avant est provoqué par un déplacement vers l'arrière de la bague 63 du crabot 64, le passage du deuxième rapport de marche avant est provoqué par un déplacement vers l'avant de la bague 63 du crabot 64, le passage du troisième rapport de marche avant est provoqué par un déplacement vers l'avant de la bague 65 du crabot 66, le passage du quatrième rapport de marche avant est provoqué par un déplacement vers l'arrière de la bague 65 du crabot 66, le passage du cinquième rapport de marche avant est provoqué par un déplacement vers l'arrière de la bague 61 du crabot 62, le passage du sixième rapport de marche avant est provoqué par un déplacement vers l'avant de la bague 61 du crabot 62, et le passage du rapport de marche arrière est provoqué par un déplacement vers l'avant de la bague 67 du crabot 68.

Conventionnellement, chaque bague 61, 63, 65,ou 67 est actionnée par une tringlerie de la boîte de vitesses 10, mais dans le mode de réalisation préféré de l'invention, chaque bague est actionnée par un vérin hydraulique ou électromagnétique d'une boîte de vitesses dite à commande robotisée.

La boîte de vitesses objet de l'invention permet donc, de par sa compacité longitudinale, de réduire notablement l'encombrement du groupe motopropulseur transversal d'un véhicule, ce qui permet de dégager dans le compartiment moteur de celui-ci une place importante pour, par exemple, des accessoires du véhicule.

## Revendications

1. Boîte de vitesses (10) de véhicule automobile, à arbres parallèles, du type qui comporte un arbre primaire (18) lié en rotation au moteur du véhicule par l'intermédiaire d'un embrayage avant (32), et deux arbres secondaires (24, 30) liés chacun en rotation à une couronne (36) d'un différentiel pour entraîner les roues du véhicule, du type dans lequel des pignons fixes (38, 40, 42, 44, 46) portés par l'arbre primaire (18) engrènent avec des pignons fous (58, 50, 52, 54, 56, 58, 60) portés par les arbres secondaires (24, 30), au moins un pignon fixe (42) de l'arbre primaire (18) engrènant en permanence avec deux pignons fous (50, 58) appartenant chacun à l'un des arbres secondaires (24, 30), les pignons fous (58, 50, 52, 54, 56, 58, 60) des arbres secondaires (24, 30) étant susceptibles d'être sélectivement liés en rotation aux arbres (24, 30) qui les portent par des moyens de crabotage pour établir sélectivement différents rapports de démultiplication et transmettre un couple du moteur aux roues du véhicule, **caractérisé en ce qu'**un des pignons fous (52) du premier arbre secondaire (24) comporte deux jeux de denture (51, 53) engrenant respectivement avec un pignon fixe (44) de l'arbre primaire (18) et avec un pignon fou (60) du second arbre secondaire (30) craboté sur celui-ci pour engager la marche arrière.

2. Boîte de vitesses (10) selon la revendication 1, **caractérisée en ce que** l'arbre primaire (18) comporte cinq pignons fixes (38, 40, 42, 44, 46) qui engrènent respectivement avec quatre pignons fous (48, 50, 52, 54) d'un premier arbre secondaire (24) et deux pignons fous (56, 58) d'un second arbre secondaire (30), pour définir six rapports de transmission de marche avant.

3. Boîte de vitesses (10) selon la revendication 1 ou 2, **caractérisée en ce que** l'arbre primaire (18) comporte, d'avant en arrière un premier pignon fixe (38), un troisième pignon fixe (42), un quatrième pignon fixe (44) et un cinquième pignon fixe (46) qui engrènent respectivement avec un premier pignon fou (48), un deuxième pignon fou (50), un troisième pignon fou (52) et un quatrième pignon fou (54) du premier arbre secondaire (24) pour définir respectivement les sixième, cinquième, second et premier rapports de transmission de marche avant lorsque les pignons fous du premier arbre secondaire (24) sont crabotés sur leur arbre.

4. Boîte de vitesses (10) selon la revendication 2 ou 3, **caractérisée en ce que** l'arbre primaire (18) comporte un deuxième pignon fixe (40) et un troisième pignon fixe (42) qui engrènent respectivement avec un premier pignon fou (56) et un deuxième pignon fou (58) du second arbre secondaire (30) pour définir respectivement les troisième et quatrième rapports de transmission de marche avant lorsque les pignons fous du second arbre secondaire (30) sont crabotés sur leur arbre.

5. Boîte de vitesses (10) selon l'une des revendications précédentes, **caractérisée en ce que** le pignon fou (52) comportant les deux jeux de denture (51, 53) n'est pas craboté sur son arbre (24) en marche arrière

6. Boîte de vitesses (10) selon la revendication 3, 4 ou 5, **caractérisée en ce que** les moyens de crabotage du premier arbre secondaire (24) comportent :
- un premier crabot double (62) permettant de craboter sélectivement le premier pignon fou (48) ou bien le deuxième pignon fou (50) sur le premier arbre secondaire (24) ; et
- un deuxième crabot double (64) permettant de craboter sélectivement le troisième pignon fou (52) ou bien le quatrième pignon fou (54) sur le premier arbre secondaire (24).

7. Boîte de vitesses (10) selon l'une des revendications 3 à 6, **caractérisée en ce que** les moyens de crabotage du second arbre secondaire (30) comportent :
- un troisième crabot double (66) permettant de craboter sélectivement le premier pignon fou (56) ou bien le deuxième pignon fou (58) sur le second arbre secondaire (30); et
- un quatrième crabot simple (68) permettant de craboter le troisième pignon fou (60) de marche arrière sur le second arbre secondaire (30).

8. Boîte de vitesses (10) selon l'une des revendications précédentes, **caractérisée en ce que** seules les extrémités des arbres primaire (18) et secondaires (24, 30) sont montées à rotation dans des paliers (14, 16, 20, 22, 26, 28) d'un carter (12) de la boîte.

9. Boîte de vitesses (10) selon la revendication 8 prise en combinaison avec la revendication 7, **caractérisée en ce que** le quatrième crabot simple (68) du troisième pignon fou (60) de marche arrière du second arbre secondaire (30) est situé à proximité du palier (28) d'extrémité arrière du second arbre secondaire (30).

10. Boîte de vitesses (10) selon la revendication 9, **caractérisée en ce que** le second arbre secondaire (30) est un arbre compact qui est monté à rotation sur les seuls paliers (26) d'extrémité avant et (28) d'extrémité arrière.

11. Boîte de vitesses selon l'une quelconque des revendications précédentes **caractérisée en ce que** les axes de rotation des arbres primaire et secondaire sont agencés transversalement suivant un V, l'arbre primaire étant agencé au sommet du V et les arbres secondaires étant agencé aux extrémités des branches du V.

## Claims

1. A motor vehicle gearbox (10) with parallel shafts of the type which comprises a primary shaft (18) connected for rotation to the engine of the vehicle by way of a front clutch (32) and two secondary shafts (24, 30) each connected for rotation to a crown wheel (36) of a differential for driving the wheels of the vehicle, of the type in which fixed pinions (38, 40, 42, 44, 46) carried by the primary shaft (18) mesh with idle pinions (58, 50, 52, 54, 56, 58, 60) carried by the secondary shafts (24, 30), at least one fixed pinion (42) of the primary shaft (18) permanently meshing with two idle pinions (50, 58) each belonging to one of the secondary shafts (24, 30), the idle pinions (58, 50, 52, 54, 56, 58, 60) of the secondary shafts (24, 30) being capable of being selectively connected for rotation to the shafts (24, 30) which carry them by dog clutch means for selectively establishing different reduction ratios and transmitting a torque from the engine to the wheels of the vehicle, **characterised in that** one of the idle pinions (52) of the first secondary shaft (24) comprises two sets of teeth (51, 53) respectively meshing with a fixed pinion (44) of the primary shaft (18) and with an idle pinion (60) of the second secondary shaft (30) which is engaged by a dog clutch thereon to engage reverse gear.

2. A gearbox (10) according to claim 1 **characterised in that** the primary shaft (18) comprises five fixed pinions (38, 40, 42, 44, 46) which respectively mesh with four idle pinions (48, 50, 52, 54) of a first secondary shaft (24) and two idle pinions (56, 58) of a second secondary shaft (30) to define six forward transmission ratios.

3. A gearbox (10) according to claim 1 or claim 2 **characterised in that** from front to rear the primary shaft (18) comprises a first fixed pinion (38), a third fixed pinion (42), a fourth fixed pinion (44) and a fifth fixed pinion (46) which respectively mesh with a first idle pinion (48), a second idle pinion (50), a third idle pinion (52) and a fourth idle pinion (54) of the first secondary shaft (24) for respectively defining the sixth, fifth, second and first forward transmission ratios when the idle pinions of the first secondary shaft (24) are engaged by dog clutches on their shaft.

4. A gearbox (10) according to claim 2 or claim 3 **characterised in that** the primary shaft (18) comprises a second fixed pinion (40) and a third fixed pinion (42) which respectively mesh with a first idle pinion (56) and a second idle pinion (58) of the second secondary shaft (30) for respectively defining the third and fourth forward transmission ratios when the idle pinions of the second secondary shaft (30) are engaged by dog clutches on their shaft.

5. A gearbox (10) according to one of the preceding claims **characterised in that** the idle pinion (52) comprising the two sets of teeth (51, 53) is not engaged by a dog clutch on its shaft (24) in reverse.

6. A gearbox (10) according to claim 3, claim 4 or claim 5 **characterised in that** the dog clutch means of the first secondary shaft (24) comprise:
- a first double dog clutch (62) permitting the first idle pinion (48) or else the second idle pinion (50) to be selectively dogged on the first secondary shaft (24), and
- a second double dog clutch (64) permitting the third idle pinion (52) or else the fourth idle pinion (54) to be selectively dogged on the first secondary shaft (24).

7. A gearbox (10) according to one of claims 3 to 6 **characterised in that** the dog clutch means of the second secondary shaft (30) comprise:
- a third double dog clutch (66) permitting the first idle pinion (56) or else the second idle pinion (58) to be selectively dogged on the second secondary shaft (30); and
- a fourth single dog clutch (68) permitting the third reverse idle pinion (60) to be dogged on the second secondary shaft (30).

8. A gearbox (10) according to one of the preceding claims **characterised in that** only the ends of the primary shaft (18) and secondary shafts (24, 30) are mounted rotatably in bearings (14, 16, 20, 22, 26, 28) of a casing (12) of the gearbox.

9. A gearbox (10) according to claim 8 in combination with claim 7 **characterised in that** the fourth single dog clutch (68) of the third reverse idle pinion (60) of the second secondary shaft (30) is disposed in the proximity of the rear end bearing (28) of the second secondary shaft (30).

10. A gearbox (10) according to claim 9 **characterised in that** the second secondary shaft (30) is a compact shaft which is mounted rotatably on just the front end (26) and rear end (28) bearings.

11. A gearbox according to any one of the preceding claims **characterised in that** the axes of rotation of the primary and secondary shafts are arranged transversely in a V, the primary shaft being arranged at the apex of the V and the secondary shafts being arranged at the ends of the arms of the V.

## Patentansprüche

1. Getriebe (10) für ein Kraftfahrzeug, das parallele Wellen aufweist, wobei eine Eingangswelle (18) mit dem Motor des Fahrzeugs über eine vordere Anfahrkupplung (32) drehfest verbindbar ist und wobei zwei Zwischenwellen (24,30) jeweils mit dem Zahnkranz (36) eines Differentials in Drehverbindung stehen zum Antrieb der Räder des Fahrzeuges und wobei Festräder (38,40,42,44,48) auf der Eingangswelle (18) angeordnet sind, die im Zahneingriff stehen mit Losrädern (48,50,52,54,56,58,60), die auf den Zwischenwellen (24,30) angeordnet sind, wobei wenigstens ein Festrad (42) der Eingangswelle (18) ständig im Zahneingriff steht mit zwei Losrädern (50, 58), von denen je eines auf einer der Zwischenwellen (24,30) angeordnet ist, während die Losräder (48,50,52,54,56,58,60) der Zwischenwellen (24,30) wahlweise mit den sie tragenden Wellen (24,30) drehfest verbindbar sind mittels Kupplungsanordnungen zur Bildung der verschiedenen Gangstufen und zur Übertragung des Drehmoments des Motors zu den Rädern des Fahrzeuges, **dadurch gekennzeichnet, dass** eines der Losräder (52) der ersten Zwischenwelle (24) zwei Verzahnungen (51,53) aufweist, die in Zahneingriff stehen mit einem ersten Festrad (44) der Eingangswelle (18) bzw. mit einem Losrad (60) der zweiten Zwischenwelle (30), das auf ihr feststellbar ist zum Einlegen des Rückwärtsganges.

2. Getriebe (10) nach Anspruch 1, **dadurch gekennzeichnet, dass** die Eingangswelle (18) fünf Festräder (38,40,42,44,46) aufweist, die im Zahneingriff stehen mit den entsprechenden vier Losrädern (48,50,52,54) einer ersten Zwischenwelle (24) und mit zwei Losrädern (56,58) einer zweiten Zwischenwelle (30) zur Bildung von sechs Gangstufen für die Vorwärtsfahrt.

3. Getriebe (10) nach Ansprüchen 1 oder 2, **dadurch gekennzeichnet, dass** die Eingangswelle (18), von vorne nach hinten gesehen, ein erstes Festrad (38), ein drittes Festrad (42), ein viertes Festrad (44) und ein fünftes Festrad (46) aufweist, die im Zahneingriff stehen mit einem ersten Losrad (48), mit einem zweiten Losrad (50), mit einem dritten Losrad (52) bzw. mit einem vierten Losrad (54) der ersten Zwischenwelle (24) zur Bildung der sechsten, der fünften, der zweiten bzw. der ersten Gangstufe für die Vorwärtsfahrt, wenn die Losräder der ersten Zwischenwelle (24) auf ihrer Welle festgestellt sind.

4. Getriebe (10) nach Ansprüchen 2 oder 3, **dadurch gekennzeichnet, dass** die Eingangswelle (18) ein zweites Festrad (40) und ein drittes Festrad (42) aufweist, die im Zahneingriff stehen mit einem ersten Losrad (56) bzw. einem zweiten Losrad (58) der zweiten Zwischenwelle (30) zur Bildung der dritten bzw. der vierten Gangstufe für die Vorwärtsfahrt, wenn die Losräder der zweiten Zwischenwelle (30) auf ihrer Welle festgestellt sind.

5. Getriebe (10) nach einem der vorhergehenden Ansprüche, **dadurch gekennzeichnet, dass** das Losrad (52), das mit den beiden Verzahnungen(51,53) versehen ist, nicht auf seiner Welle (24) während der Rückwärtsfahrt festgestellt ist.

6. Getriebne (10) nach Ansprüchen 3, 4 oder 5, **dadurch gekennzeichnet, dass** die Kupplungsanordnung der ersten Zwischenwelle (24) aufweist:
- eine erste Doppelkupplung (62) zur wahlweisen Feststellung des ersten Losrades (48) oder des zweiten Losrades (50) auf der ersten Zwischenwelle (24) und
- eine zweite Doppelkupplung (64) zur wahlweisen Feststellung des dritten Losrades (52) oder des vierten Losrades (54) auf der ersten Zwischenwelle (24).

7. Getriebe nach einem der Ansprüche 3 bis 6, **dadurch gekennzeichnet, dass** die Kupplungsanordnung der zweiten Zwischenwelle (30) aufweist:
- eine dritte Doppelkupplung (66) zur wahlweisen Feststellung des ersten Losrades (56) oder des zweiten Losrades (58) auf der zweiten Zwischenwelle (30) und
- eine vierte Einfachkupplung (68) zur Feststellung des dritten Losrades (60) für den Rückwärtsgang auf der zweiten Zwischenwelle (30).

8. Getriebe (10) nach einem der vorhergehenden Ansprüche, **dadurch gekennzeichnet, dass** nur die Enden der Eingangswelle (18) und der Zwischenwellen ( 24,30) drehbar in Lagern (14,16,20,22,26,28) im Getriebegehäuse (12) gelagert sind.

9. Getriebe nach Anspruch 8 in Kombination mit Anspruch 7, **dadurch gekennzeichnet, dass** die vierte Einfachkupplung (68) des dritten Losrades (60) für den Rückwärtsgang der zweiten Zwischenwelle (30) in der Nähe des Endlagers (28) der zweiten Zwischenwelle (30) angeordnet ist.

10. Getriebe (109 nach Anspruch 9, **dadurch gekennzeichnet, dass** die zweite Zwischenwelle (30) eine kompakte Welle ist, die drehbar nur in dem vorderen Endlager (26) und in dem hinteren Endlager (28) gelagert ist.

11. Getriebe nach einem der vorhergehenden Ansprüche, **dadurch gekennzeichnet, dass** die Drehachsen der Eingangswelle und der beiden Zwischenwellen in Querrichtung V-förmig angeordnet sind, wobei die Eingangswelle an der Spitze des V und die Zwischenwellen an den Enden der Arme des V angeordnet sind.
